# FASCICULE DE BREVET EUROPEEN

(11) **EP 2 605 880 B1**
(45) Date de publication et mention de la délivrance du brevet: **31.08.2016**
(21) Numéro de dépôt: 11752301.9
(22) Date de dépôt: 27.07.2011
(51) Int. Cl.: B23K 9/025, B23K 9/16, B23K 9/167, B23K 9/173

(54) **DISPOSITIF ET PROCEDE DE SOUDAGE A L'ARC AVEC UNE TORCHE MIG/MAG ASSOCIEE A UNE TORCHE TIG**
BOGENSCHWEISSVORRICHTUNG UND -VERFAHREN UNTER VERWENDUNG EINES MIG/MAG-BRENNERS IN KOMBINATION MIT EINEM WIG-BRENNER
ARC WELDING DEVICE AND PROCESS USING AN MIG/MAG TORCH COMBINED WITH A TIG TORCH

(30) Priorité: 17.08.2010 FR 1056621
(43) Date de publication de la demande: 26.06.2013
(73) Titulaire: Air Liquide Welding France, 75007 Paris (FR)
(72) Inventeur: PLANCKAERT, Jean-Pierre, F-60240 Monneville (FR); BISKUP, Laurent, 60590 Serifontaine (FR)
(74) Mandataire: Pittis, Olivier
(86) Numéro de dépôt international: PCT/FR2011/051802
(87) Numéro de publication internationale: WO 2012/022895

(56) Documents cités:
- GB-A- 764 571
- JP-A- 55 073 479
- JP-A- 57 036 070
- JP-A- 58 003 778
- JP-A- 59 110 474
- US-A- 3 549 857
- US-A1- 2010 059 485

## Description

L'invention concerne un dispositif et un procédé de soudage à l'arc de pièces métalliques mettant en oeuvre une torche de soudage MIG/MAG associée à une torche de soudage TIG aptes à et conçues pour fonctionner simultanément et à obtenir des joints de soudure sans défauts de type bosselage voir le préambule des revendications 1 et 5 (voir, par example, JP 558/3778 A).

On appelle soudage MIG ou MAG, pour respectivement *Metal Inert Gas* (soudure de métal sous gaz inerte) et *Metal Active Gas* (soudure de métal sous gaz actif), les techniques de soudage ou de soudo-brasage à l'arc électrique avec électrode fusible et gaz de protection, notamment de tôles, revêtues ou non.

Lors de la mise en oeuvre de ces procédés MIG/MAG, la chaleur que dégage l'arc électrique provoque la fusion de l'extrémité du métal d'apport, c'est-à-dire du fil fusible, et éventuellement du métal de base, c'est-à-dire du métal ou alliage métallique constitutif des pièces à souder. Un gaz ou un mélange de gaz assure habituellement la protection du bain de fusion, autour du joint de soudage en cours de formation, contre les contaminations atmosphériques durant le soudage.

Un dispositif de soudage à l'arc MIG/MAG comporte une torche MIG/MAG, des moyens d'alimentation électrique, un circuit de commande et un fil métallique ou électrode fusible, positionné au voisinage, notamment au-dessus, d'une ou plusieurs pièces à souder sur la ou lesquelles une soudure doit être réalisée. Le dispositif comprend en outre des moyens pour déplacer la torche de soudage le long de la soudure à réaliser.

Afin d'augmenter la productivité de l'opération de soudage, notamment pour l'assemblage des tôles fines, il existe différentes méthodes connues, à savoir augmenter la vitesse d'avance de la torche de soudage, diminuer le parachèvement, diminuer la préparation, ou diminuer les rebuts.

La première méthode présente l'inconvénient qu'un défaut de soudage apparaît lorsque la vitesse de soudage, c'est-à-dire la vitesse du déplacement de la torche, dépasse une certaine limite. Le profil du cordon de soudure présente alors une ondulation périodique connue en anglais sous le nom de *humping,* ou bosselage, c'est-à-dire la formation de bosses. Ce défaut d'aspect peut aussi avoir des conséquences négatives sur la résistance mécanique de la soudure. Il limite la plage des vitesses de soudage utilisables et empêche d'augmenter productivité de l'opération de soudage.

L'apparition du défaut de *humping* survient principalement sous deux formes en soudage MIG/MAG, à savoir *gouging region morphology* (GRM) ou morphologie de région de gougeage ; et *beaded cylinder morphology* (BCM) ou morphologie en cylindre « perlé ».

En fait, le mécanisme d'apparition du *humping* est complexe car il fait intervenir la mécanique des fluides (métal en fusion), la thermique et la physique de l'arc électrique. Par exemple, l'apparition du défaut *humping* de type BCM semble être liée à un mauvais mouillage générant une instabilité de pincement analogue à celle décrite dans la théorie de Rayleigh.

Il existe différentes méthodes permettant d'augmenter la vitesse de soudage qui présentent toutes des inconvénients, à savoir :
- opérer un préchauffage des tôles à souder. Cependant, la mise en oeuvre est compliquée car il est indispensable de maîtriser la température initiale de la tôle pour obtenir une reproductibilité des résultats. En outre, on dépense une certaine énergie à chauffer l'intégralité des pièces à souder.
- faire précéder la torche MIG/MAG d'un faisceau laser défocalisé pour préchauffer la tôle devant l'arc MIG-MAG et de créer un fin film de métal liquide. Or, cette méthode engendre un coût élevé puisqu'elle requiert une source laser d'au moins 3 kW.
- souder en tandem avec deux torches MIG pour allonger le bain de soudure en disposant de deux arcs MIG. Toutefois, cette solution est lourde en investissement et en mise en oeuvre car elle impose deux systèmes de dévidage et l'utilisation de deux générateurs MIG/MAG, ainsi qu'une synchronisation entre les générateurs pour éviter l'attraction des arcs. De plus, le soudage tandem ne permet pas d'avoir indépendamment de l'apport de fil, un flux de chaleur et une pression d'arc contrôlable en vue de contrarier le défaut de *humping.*
- combiner un soudage par arc plasma en mode *keyhole* (trou de serrure) et un soudage MIG de sorte que l'arc plasma frappe les tôles avant l'arc MIG pour assurer d'abord une bonne pénétration, puis un comblement des vides créés par l'arc plasma. Les résultats sont intéressants, mais la mise en oeuvre de ce procédé est relativement, en particulier le réglage du plasma *keyhole* est très pointu et la distance réduite entre arc MIG et arc plasma conduit à des interactions néfastes entre les arcs.

Au vu de cela, le problème qui se pose est de remédier à tout ou partie des inconvénients mentionnés ci-dessus, c'est-à-dire en particulier de fournir un dispositif de soudage MIG-MAG supportant des vitesses de soudage plus élevées, sans apparition du défaut de *humping* (bosselage), à la fois simple à mettre en oeuvre et/ou ne requérant pas de quantités d'énergie trop importantes.

La solution de l'invention porte alors sur un dispositif de soudage à l'arc de pièces métalliques tel que défini dans la revendication 1, et comprenant une torche de soudage de type MIG ou MAG associée à une torche de soudage de type TIG de manière à fonctionner simultanément, où ladite torche de soudage MIG/MAG comprend un guide-fil permettant de guider un fil fusible selon une première direction donnée et la torche de soudage TIG comprend une électrode non fusible pointant dans une seconde direction donnée, lesdites première et seconde directions étant coplanaires et forment un angle α supérieur à 5° et inférieur à 40°, et l'électrode de la torche de soudage TIG comprend une pointe D située à une distance 'd' de ladite première direction 1b comprise entre 20 et 44 mm.

Selon l'invention, la torche de soudage de type MIG/MAG est apte à produire un cordon de soudure brut au niveau du plan de joint situé à la jonction des pièces à souder, alors que la torche de soudage TIG, qui est solidaire de la torche de soudage MIG/MAG, est apte à fonctionner simultanément avec la torche de soudage MIG/MAG et à produire ainsi un arc électrique frappant le cordon de soudure brut de sorte d'obtenir un cordon final sans ou quasi sans défauts de type bosselage.

En fait, la proximité entre les deux arcs et leur succession rapide sur une même zone du joint font que cette même zone de joint est frappée successivement par d'abord l'arc MIG/MAG, puis ensuite par l'arc TIG alors que le métal de cette zone de joint est encore liquide, c'est-à-dire en fusion après passage de l'arc MIG/MAG.

Il s'ensuit que l'arc TIG va aller exercer son action sur le bain de soudage formé par l'arc MIG/MAG alors qu'il est encore liquide, et le bain de soudage va alors profiter du flux de chaleur généré par l'arc TIG pour ne pas se solidifier mais aussi de la pression exercée par cet arc sur la bosse de métal fondu formée à l'extrémité arrière de ce bain, ce qui permet d'obtenir un cordon de soudure sans ou quasi sans défauts de type bosselage.

Il est à souligner que par « pièces métalliques », on entend que plusieurs pièces métalliques distinctes mais aussi une seule pièce souder à le-même, par exemple les deux bords longitudinaux d'une feuille métallique de manière à former un tube soudé.

La torche de type MIG ou MAG » mise en oeuvre comporte un système de guidage de fil comportant un guide-fil destiné à guider au moins un fil fusible jusqu'à la sortie de la torche située en vis-à-vis des pièces à souder et une buse destinée à apporter du gaz inerte ou du gaz actif au voisinage de la zone de fusion du fil fusible.

Le fil fusible sert d'électrode et la torche MIG/MAG est alimentée électriquement par une ou plusieurs sources électriques externes, tel un générateur de courant de soudage, de manière à pouvoir créer un arc entre le fil fusible et les pièces à souder, et ainsi fondre progressivement le fil qui se dépose au niveau du plan de joint situé entre les pièces à souder en formant ainsi un cordon de soudage brut.

La torche est par ailleurs alimentée en gaz provenant d'un réservoir ou d'un réseau de canalisations.

La torche est déplacée relativement aux pièces à souder par des moyens de déplacement automatiques permettant de lui imprimer un mouvement le long de tout ou partie du plan de joint, c'est-à-dire selon une trajectoire donnée correspondant à la soudure à réaliser.

Par ailleurs, selon l'invention, une torche de soudage TIG à électrode en tungstène est associée à la torche MIG/MAG. Par « torche de type TIG », on entend un système de soudage comportant au minimum au moins une électrode en tungstène, ainsi qu'une buse destinée à apporter du gaz inerte dans la zone de l'arc électrique créé par la torche.

Les torches MIG/MAG et TIG peuvent être alimentées par une même source de gaz, une même source électrique ou alors par des sources différentes. De même, les moyens de déplacement des torches peuvent être aussi communs ou non aux deux torches.

La torche TIG produit un arc permettant de traiter le cordon de soudure brut produit par la torche MIG/MAG, c'est-à-dire d'y opérer un chauffage et une action mécanique par phénomène de pression d'arc de sorte de réduire ou supprimer le défaut de *humping* du cordon.

La vitesse relative à laquelle les torches de soudage sont déplacées, c'est-à-dire la vitesse de soudage, est augmentée significativement. Il n'est pas nécessaire de chauffer une grande partie des pièces à souder. On traite assez ponctuellement une zone du cordon de soudure peu après sa formation, donc la dépense d'énergie liée à la torche TIG reste modérée.

Selon l'invention, par « associée à la torche MIG/MAG », on veut dire que la torche TIG est liée mécaniquement à la torche MIG/MAG de manière à pouvoir la suivre dans ses mouvements et à fonctionner simultanément avec elle.

Selon le cas, le dispositif de l'invention peut comprendre l'une ou plusieurs des caractéristiques suivantes :
- il comporte en outre des moyens de réglage, tel un ou des vérins, engrenages..., permettant d'ajuster la position relative desdites torches de soudage l'une par rapport à l'autre, c'est-à-dire la distance entre lesdites torches ou entre celles-ci et les pièces à souder, ou encore les différents angles.
- ladite torche de soudage MIG/MAG comprend un guide-fil permettant de guider un fil fusible selon une première direction donnée et la torche de soudage TIG comprend une électrode non fusible pointant dans une seconde direction donnée, lesdites première et seconde directions étant sensiblement coplanaires et formant un angle α compris entre 0 et 40°, de préférence entre 0 et 20°, c'est-à-dire que les deux torches sont parallèles ou convergent l'une vers l'autre. De manière particulière, cet angle est compris entre 5 et 15 degrés, ce qui permet d'augmenter la vitesse de soudage, toutes choses égales par ailleurs. Par « sensiblement coplanaires », on entend que la distance entre les droites matérialisant ces directions est inférieure à 3 mm, de préférence 1,5 mm. Ceci présente l'avantage de ne pas induire de dissymétrie significative du cordon. Au-delà de ces marges, il y aurait un risque de fragiliser le cordon.
- l'électrode de la torche de soudage TIG comprend une pointe située à une distance d de ladite première direction comprise entre 20 et 26 mm ou entre 36 et 44 mm. On peut définir géométriquement cette distance comme la distance euclidienne entre la pointe de l'électrode tungstène, considérée comme un point, et sa projection orthogonale sur la première direction donnée (celle du fil MIG-MAG à sa sortie). Cette plage de distance permet d'augmenter la vitesse de soudage, toutes choses égales par ailleurs.
- la pointe de l'électrode TIG est située à une distance d de la première direction comprise entre 20 et 26 mm lorsque les pièces sont en acier inoxydable.
- la pointe de l'électrode TIG est située à une distance de la première direction comprise entre 36 et 44 mm lorsque les pièces sont en acier au carbone.
- lesdites première et seconde directions forment un angle α entre 10° et 30°.
- lesdites première et seconde directions forment un angle α entre 15° et 25°, de préférence entre 18 et 23°, avantageusement de l'ordre de 20°.
- l'électrode comprend un affûtage conique au niveau de la pointe de l'électrode, l'affûtage conique présentant une ouverture β comprise entre 20 et 40°, ce qui permet aussi d'augmenter la vitesse de soudage. Cet affûtage prend en général la forme d'un cône de révolution. On définit l'ouverture de ce cône comme le double de l'angle fait par une génératrice et l'axe de révolution du cône.

L'invention concerne également un procédé de soudage à l'arc de pièces métalliques tel que défini dans la revendication 5, et comprenant les étapes de :
a) réalisation progressive d'un cordon de soudure brut sur les pièces métalliques, c'est-à-dire le long du plan de joint à souder, au moyen d'une torche de soudage de type MIG/MAG, déplacée relativement par rapport auxdites pièces métalliques, en général selon un mouvement de translation, et
b) application d'un arc électrique sur au moins une partie du cordon de soudure brut obtenu à l'étape a), l'arc électrique étant produit par une torche de soudage de type TIG qui est déplacée de manière synchronisée avec la torche de soudage de type MIG/MAG, où :
   - à l'étape a), on guide un fil fusible délivré par la torche MIG/MAG selon une première direction perpendiculaire aux pièces à souder, et
   - à l'étape b), la torche de soudage TIG est orientée de manière à ce que l'électrode équipant ladite torche TIG pointe dans une seconde direction coplanaire avec la première direction, et forme avec ladite première direction un angle α entre 5 et 40°, ladite torche de soudage TIG étant déplacée de manière à ce que la pointe de l'électrode reste à une distance de la première direction comprise entre 20 et 44 mm.

En fait, l'étape a) du procédé est une étape de soudage MIG/MAG classique, visant à produire un cordon de soudure « brut » n'ayant pas encore subi l'étape b) du procédé.

Par ailleurs, l'étape b) consiste à réaliser un traitement par arc électrique du cordon de soudure brut. Plus précisément, il s'agit de créer un arc électrique à l'aide de la torche de type TIG et d'appliquer cet arc sur tout ou partie du cordon situé en aval du point où il est formé par dépôt de métal en fusion à l'aide de la torche MIG/MAG.

Le traitement progressif par l'arc le long du cordon brut engendre en fait un chauffage localisé du cordon et un phénomène de pression d'arc conduisant à un cordon de soudure final, sans ou quasi sans défaut de type bosselages, malgré une augmentation de la vitesse de soudage.

Selon le cas, le procédé de l'invention peut comprendre l'une ou plusieurs des caractéristiques suivantes :
- à l'étape a) on guide un fil fusible délivré par la torche MIG/MAG selon une première direction sensiblement perpendiculaire aux pièces à souder, c'est-à-dire que les pièces métalliques présentent une surface vers la torche MIG ou MAG et que la première direction, celle du fil fusible lors de sa sortie de la torche, est à peu près orthogonale à la surface en question. Il a été observé que cette configuration est plus favorable pour retarder l'apparition du *humping.*
- à l'étape b), la torche de soudage TIG est orientée de manière à ce que l'électrode équipant ladite torche TIG pointe dans une seconde direction sensiblement coplanaire avec la première direction, c'est-à-dire à peu près dans un même plan. Ceci permet une intervention de la torche TIG symétrique par rapport au cordon.
- à l'étape b), on oriente la torche de soudage TIG de manière à ce que ladite seconde direction forme avec la première direction un angle α compris entre 0 et 40°, de préférence entre 5 et 30°. Selon un mode particulier, cet angle est compris entre 15° et 25°, de préférence entre 18 et 23°, avantageusement de l'ordre de 20°.
- à l'étape b), on déplace la torche de soudage TIG de manière à ce que la pointe de l'électrode reste à une distance de la première direction comprise entre 20 et 26 mm.
- la torche de soudage TIG met en oeuvre un gaz inerte comprenant de l'argon, de préférence de l'argon ayant une pureté d'au moins 99% en volume. Selon un mode plus particulier, la pureté est d'au moins 99.99% en volume. Les autres constituants sont alors des impuretés inévitables, tel que vapeur d'eau, oxygène, azote, gaz rares. Les gaz utilisables sont disponibles auprès de la société Air Liquide.
- de manière alternative, la torche de soudage TIG met en oeuvre un gaz formé d'argon et de moins de 10% en volume d'hydrogène, typiquement un gaz formé d'argon et de l'ordre de 5% environ d'hydrogène.
- on soude des pièces métalliques en acier inoxydable, la pointe de l'électrode est positionnée à une distance de la première direction comprise entre 20 et 26 mm, de préférence de l'ordre de 24 mm.
- on soude des pièces métalliques en acier au carbone, la pointe de l'électrode est positionnée à une distance de la première direction comprise entre 36 et 44 mm, de préférence de l'ordre de 40 mm.
- l'arc TIG et l'arc MIG viennent frapper la ou les pièces au niveau d'un bain de soudure unique commun.
- la position relative, en distance et en angle, de la torche TIG par rapport à la torche MIG/MAG est réglée à l'avance, avant de commencer l'opération de soudage ou est ajustée durant le procédé de soudage. L'ajustement peut être permanent de façon à adapter la forme du système à celle des pièces à souder et au type de soudure souhaité.
- l'arc TIG est obtenu avec un courant pulsé, c'est-à-dire qu'on alimente l'électrode non fusible en tungstène servant à générer l'arc TIG avec un courant électrique pulsé.
- l'arc TIG est obtenu avec un courant pulsé et l'arc MIG est obtenu avec un courant lisse, c'est-à-dire qu'on alimente l'électrode non fusible en tungstène servant à générer l'arc TIG avec un courant électrique pulsé et simultanément on alimente l'électrode fusible MIG (fil fusible) avec un courant électrique lisse.

D'autres particularités et avantages apparaîtront à la lecture de la description ci-après, faite en référence aux figures, parmi lesquelles :
- la Figure 1 représente schématiquement un dispositif de soudage selon l'invention, en particulier l'agencement des torches de soudage en fonctionnement, et
- la Figure 2 représente une pièce à souder et illustre ce qui se passe au niveau du cordon de soudure.

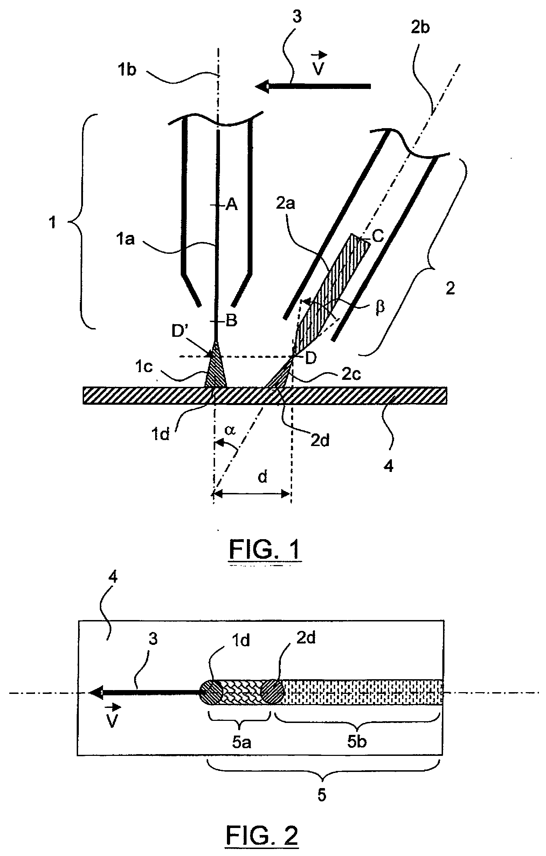

Sur la figure 1, les pièces métalliques 4 à souder sont horizontales. Le dispositif comprend une première torche de soudage 1 de type MIG. Elle se développe selon une première direction donnée 1b verticale, qui est aussi la direction prise par un fil fusible la sortant de cette torche lorsqu'elle est en fonctionnement. Le fil 1a sert d'électrode. En fonctionnement, elle est destinée à créer un arc électrique 1c. Le fil la fond, ce qui permet un dépôt de métal à l'endroit 1d des pièces métalliques 4. La torche 1 est déplacée selon un vecteur vitesse 3 par rapport aux pièces métalliques 4. Le dépôt de métal dans la zone 1d permet la création d'un cordon de soudure brut 5a (voir figure 2). Le système de dévidage et de guidage du fil, la source de puissance électrique, la source de gaz inerte et les moyens de pilotage de la torche 1 sont connus de l'homme du métier et n'ont pas été représentés.

Le dispositif comprend en outre une seconde torche 2, de type TIG. Elle se développe selon une seconde direction donnée 2b, qui est aussi celle de son électrode 2a en tungstène. Les directions 1b et 2b sont coplanaires (dans un même plan). L'électrode 2a comporte une pointe D, à l'extrémité d'un affûtage conique présentant une ouverture angulaire β de 30 degrés. L'électrode 2a converge légèrement vers la torche 1. Plus précisément, l'angle α fait par les directions 1b et 2b est de 10 degrés. Par souci de clarté, l'angle α représenté sur la figure 1 est plus grand. La distance d entre la pointe D de l'électrode 2a et la première direction donnée 1b est obtenue en projetant orthogonalement le point D sur l'axe 1b et en mesurant la distance DD'. Cette distance d est de 22 millimètres.

En fonctionnement, la torche 2 permet de créer un arc électrique 2c qu'on applique à la zone 2d du cordon de soudure 5 (voir figure 2). La torche 2 suit la torche 1 dans son mouvement, normalement à la vitesse v de soudage.

De même que pour la torche 1, les auxiliaires électrique, gazeux ou mécanique de la torche 2 n'ont pas été représentés. Les torches 1 et 2 sont fixées de sorte qu'elles soient mécaniquement solidaires l'une de l'autre et qu'on puisse ajuster à tout moment leur position relative, notamment l'angle α et la distance d, et leur position par rapport aux pièces 4.

Sur la figure 2, on a représenté les pièces 4, vues du dessus, et le cordon de soudure 5. Lorsque que le dispositif est en fonctionnement, du métal en fusion est déposé dans la zone 1d. Par déplacement 3 de la torche 1, à la vitesse de soudage v, ce dépôt donne naissance à un cordon de soudage brut 5a. La zone de dépôt 1d est à la tête du cordon de soudure 5a. La zone de traitement 2d permet d'obtenir un cordon traité 5b. Toutes choses égales par ailleurs, on peut déplacer les torches 1 et 2 à une vitesse v plus élevée sans qu'il en résulte un défaut de *humping* dans la partie 5b du cordon de soudure 5.

Le tableau A ci-dessous montre l'impact de certains paramètres sur la vitesse de soudage maximale *v max* qui peut être obtenue sans faire apparaître le défaut de *humping* sur le cordon 5b.

**Tableau A : Etude paramétrique**

| **#** | **d (mm)** | **α (°)** | **β (°)** | **TIG gas -** | **TIG current -** | **v max cm/min** |
|---|---|---|---|---|---|---|
| 1 | 16 | **15** | 30 | Arcal 1 | C1 | 260 |
| | 16 | **40** | 30 | Arcal 1 | C1 | 260 |
| | 16 | **-15** | 30 | Arcal 1 | C1 | 220 |
| | 16 | **-40** | 30 | Arcal 1 | C1 | 220 |
| | 16 | **0** | 30 | Arcal 1 | C1 | 270 |
| 2 | 16 | 0 | **15** | Arcal 1 | C1 | 260 |
| | 16 | 0 | **45** | Arcal 1 | C1 | 260 |
| 3 | 16 | 0 | 30 | Arcal 1 | C2 | 280 |
| 4 | **14** | 0 | 30 | Arcal 1 | C2 | 260 |
| | **18** | 0 | 30 | Arcal 1 | C2 | 280 |
| | **22** | 0 | 30 | Arcal 1 | C2 | 320 |
| | **24** | 0 | 30 | Arcal 1 | C2 | 320 |
| | **26** | 0 | 30 | Arcal 1 | C2 | 280 |
| | **28** | 0 | 30 | Arcal 1 | C2 | 280 |
| 5 | 22 | 0 | 30 | **Arcal 32** | C2 | 270 |
| | 22 | 0 | 30 | **Arcal 37** | C2 | 280 |

La première colonne (#) représente le numéro des séries de tests. Pour chaque série, on a fait varier un seul paramètre (en gras) :
- Série #1 : l'angle α fait par les directions 1b et 2b. Les valeurs positives de l'angle correspondent aux cas où le fil fusible 1a et l'électrode non fusible 2a convergent l'un vers l'autre. Les valeurs négatives de l'angle correspondent aux cas où l'électrode 2a diverge par rapport au fil 1a. On constate que les valeurs négatives sont défavorables. Il existe un optimum assez plat entre 0 et 40° ; 0° correspondant au parallélisme des directions 1b et 2b. La direction 1b est verticale dans tous les cas.
- Série #2 : on fait varier l'angle d'affûtage β. Il existe un optimum assez plat entre 20 et 40°.
- Série #3 : on a fait varier le type de courant parcourant l'électrode 2a de la torche de soudage TIG. « C1 » signifie qu'on a utilisé un courant constant de 125 A. « C2 » signifie qu'on a utilisé un courant de type pulsé dont l'intensité varie en créneaux entre 100 A et 150 A. Le mode pulsé « C2 » est légèrement plus favorable.
- Série #4 : on a fait varier entre 14 et 28 mm, la distance entre la pointe D de l'électrode 2a et l'axe 2b de la torche MIG. Une plage optimale assez nette se dégage entre 20 et 26 mm.
- Série #5 : dans les autres tests, le gaz inerte utilisé pour la torche TIG était de l'Arcal 1 d'Air Liquide, disponible dans le commerce, qui est de l'argon quasi pur (pureté supérieure à 99.998% en volume). Dans cette série, on a testé deux autres gaz. Arcal 32 est essentiellement un mélange argon - hélium, où la fraction volumique de l'hélium est de 20% en volume. Arcal 37 est également un mélange argon - hélium, où la fraction volumique d'hélium est de 70% en volume. Comme on peut le voir, les résultats sont meilleurs avec le gaz Arcal 1 qu'avec les mélanges Arcal 32 ou Arcal 37.

Le dispositif et le procédé de soudage à l'arc de pièces métalliques selon l'invention peuvent être mis en oeuvre pour souder des pièces métalliques en différents matériaux, à savoir notamment de l'acier, de l'acier inoxydable, de l'aluminium et ses alliages, du titane et ses alliages... que ces pièces soient revêtues ou non d'une couche surfacique de zinc ou d'aluminium par exemple.

Des essais complémentaires consignés dans le Tableau B ont permis de vérifier l'influence du type de courant mis en oeuvre au niveau de la torche TIG, à savoir un courant pulsé ou un courant lisse.

**Tableau B : Comparatif courant lisse et pulsé**

| d | α | β | Gaz pour procédé TIG | Courant du procédé TIG | Vmax cm/min |
|---|---|---|---|---|---|
| 24 | 20 | 30 | Ar | C2 | 340 |
| 24 | 20 | 30 | Ar | C3 | 340 |
| 24 | 25 | 30 | Ar | C2 | 320 |
| 24 | 25 | 30 | Ar | C3 | 320 |
| 24 | 30 | 30 | Ar | C2 | 310 |
| 24 | 30 | 30 | Ar | C3 | 310 |
| 24 | 20 | 30 | Ar+ 5% H₂ | C2 | 360 |
| 24 | 20 | 30 | Ar+ 5% H₂ | C3 | 360 |

Dans le Tableau B, le courant « C3 » est un courant lisse de 140 A. Les résultats obtenus montrent clairement qu'il est possible d'obtenir les mêmes performances en courant lisse qu'en courant pulsé, à condition de mettre en oeuvre un courant lisse de valeur plus élevée que celle du courant moyen du mode pulsé.

Dans tous les cas, le dispositif et le procédé de soudage à l'arc mettant en oeuvre une torche de soudage MIG/MAG associée à une torche de soudage TIG fonctionnant simultanément permettant d'obtenir des joints de soudure sans défauts de type bosselage.

## Revendications

1. Dispositif de soudage à l'arc de pièces métalliques (4) comprenant une torche de soudage (1) de type MIG ou MAG associée à une torche de soudage (2) de type TIG de manière à fonctionner simultanément, et où ladite torche de soudage MIG/MAG (1) comprend un guide-fil permettant de guider un fil fusible (1a) selon une première direction donnée (1b) et la torche de soudage TIG (2) comprend une électrode (2a) non fusible pointant dans une seconde direction donnée (2b), **caractérisé en ce que** lesdites première et seconde directions (1b, 2b), sont coplanaires et forment un angle (α) supérieur à 10° et inférieur à 40°, et **en ce que** l'électrode (2a) de la torche de soudage TIG (2) comprend une pointe (D) située à une distance (d) de ladite première direction (1b) comprise entre 20 et 44 mm.

2. Dispositif selon la revendication 1, **caractérisé en ce que** la pointe (D) est située à une distance (d) de la première direction (1b) comprise entre 20 et 26 mm ou entre 36 et 44 mm

3. Dispositif selon l'une des revendications précédentes, **caractérisé en ce que** lesdites première et seconde directions (1b, 2b) forment un angle (α) entre 15° et 25°, de préférence entre 18 et 23°, avantageusement de l'ordre de 20°.

4. Dispositif selon la revendication 1, **caractérisé en ce que** l'électrode (2a) comprend un affûtage conique au niveau de ladite pointe (D), ledit affûtage conique présentant une ouverture (β) comprise entre 20 et 40 °.

5. Procédé de soudage à l'arc de pièces métalliques (4) comprenant les étapes de :
a) réalisation progressive d'un cordon de soudure (5a) sur les pièces métalliques (4) au moyen d'une torche de soudage (1) de type MIG/MAG avec fil d'apport fusible, déplacée relativement par rapport auxdites pièces métalliques (4),
b) application d'un arc électrique (2c) sur au moins une partie du cordon de soudure brut (5a) obtenu à l'étape a), l'arc électrique (2c) étant produit par une torche de soudage (2) de type TIG qui est déplacée de manière synchronisée avec la torche de soudage (1) de type MIG/MAG,
, où à l'étape a), on guide un fil fusible (1a) délivré par la torche MIG/MAG selon une première direction (1b) characterisé en ce que : perpendiculaire aux pièces à souder, et
- à l'étape b), la torche de soudage TIG (2) est orientée de manière à ce que l'électrode (2a) équipant ladite torche TIG pointe dans une seconde direction (2b) coplanaire avec la première direction (1b), et forme avec ladite première direction (1b) un angle (α) entre 5 et 40°, ladite torche de soudage TIG (2) étant déplacée de manière à ce que la pointe de l'électrode (2a) reste à une distance de la première direction (1b) comprise entre 20 et 44 mm.

6. Procédé selon la revendication 5, **caractérisé en ce que**, à l'étape b), on oriente ladite torche de soudage TIG (2) de manière à ce que ladite seconde direction donnée (2b) forme avec ladite première direction (1b) un angle (α) entre 15° et 25°, de préférence entre 18 et 23°, avantageusement de l'ordre de 20°.

7. Procédé selon l'une quelconque des revendications 5 ou 6, **caractérisé en ce que** la torche de soudage TIG (2) met en oeuvre un gaz inerte comprenant de l'argon.

8. Procédé selon l'une quelconque des revendications 5 à 7, **caractérisé en ce que** la torche de soudage TIG (2) met en oeuvre de l'argon ayant une pureté d'au moins 99% en volume ou un gaz formé d'argon et de moins de 10% en volume d'hydrogène.

9. Procédé selon l'une quelconque des revendications 5 à 8, **caractérisé en ce qu'**on soude des pièces métalliques en acier inoxydable, la pointe de l'électrode (2a) est positionnée à une distance de la première direction (1b) comprise entre 20 et 26 mm, de préférence de l'ordre de 24 mm.

10. Procédé selon l'une quelconque des revendications 5 à 8, **caractérisé en ce qu'**on soude des pièces métalliques en acier au carbone, la pointe de l'électrode (2a) est positionnée à une distance de la première direction (1b) comprise entre 36 et 44 mm, de préférence de l'ordre de 40 mm.

11. Procédé selon l'une des revendications 5 à 10, **caractérisé en ce que** l'arc TIG et l'arc MIG viennent frapper la ou les pièces au niveau d'un bain de soudure unique commun.

12. Procédé selon l'une des revendications 5 à 11, **caractérisé en ce que** l'arc TIG est obtenu avec un courant pulsé.

13. Procédé selon l'une des revendications 5 à 11, **caractérisé en ce que** l'arc TIG est obtenu avec un courant pulsé et l'arc MIG est obtenu avec un courant lisse.

## Patentansprüche

1. Vorrichtung zum Lichtbogenschweißen von Metallteilen (4), einen Schweißbrenner (1) des Typs MIG oder MAG umfassend, der einem Schweißbrenner (2) des Typs TIG zugeordnet ist, um zugleich zu funktionieren, und wobei der besagte MIG/MAG Schweißbrenner (1) eine Drahtführung umfasst, mit der ein Schmelzdraht (1a) in eine erste gegebene Richtung (1b) geführt werden kann, und der TIG Schweißbrenner (2) eine nicht abschmelzende Elektrode (2a) umfasst, die in eine zweite gegebene Richtung (2b) zeigt, **dadurch gekennzeichnet, dass** die besagten ersten und zweiten Richtungen (1b, 2b) komplanar sind und einen Winkel (α) größer als 10° und kleiner als 40° bilden, und dadurch, dass die Elektrode (2a) des TIG Schweißbrenners (2) eine Spitze (D) umfasst, die sich in einem Abstand (d) zur besagten ersten Richtung (1b) befindet, der zwischen 20 und 44 mm liegt.

2. Vorrichtung nach Anspruch 1, **dadurch gekennzeichnet, dass** sich die Spitze (D) in einem Abstand (d) zur ersten Richtung (1b) befindet, der zwischen 20 und 26 mm oder zwischen 36 und 44 mm liegt.

3. Vorrichtung nach einem der vorherigen Ansprüche, **dadurch gekennzeichnet, dass** die besagten ersten und zweiten Richtungen (1b, 2b) einen Winkel (α) zwischen 15° und 25°, vorzugsweise zwischen 18° und 23°, und am besten in der Größenordnung von 20° bilden.

4. Vorrichtung nach Anspruch 1, **dadurch gekennzeichnet, dass** die Elektrode (2a) einen konischen Schliff im Bereich der besagten Spitze (D) umfasst, wobei der besagte konische Schliff eine Öffnung (β) zwischen 20 und 40° aufweist.

5. Verfahren zum Lichtbogenschweißen von Metallteilen (4), die folgenden Schritte umfassend:
a) Progressive Erstellung einer Schweißnaht (5a) auf den Metallteilen (4) anhand eines Schweißbrenners (1) des Typs MIG/MAG mit einem schmelzenden Schweißdraht, der im Verhältnis zu den besagten Metallteilen (4) bewegt wird,
b) Anwenden eines Lichtbogens (2c) auf zumindest einen Abschnitt der im Schritt a) erhaltenen rohen Schweißnaht (5a), wobei der Lichtbogen (2c) durch einen Schweißbrenner (2) des Typs TIG erzeugt wird, der in synchronisierter Art und Weise mit dem Schweißbrenner (1) des Typs MIG/MAG bewegt wird,
wobei man im Schritt a) einen Schmelzdraht (1a) führt, der vom Schweißbrenner des Typs MIG/MAG in eine erste Richtung (1b) bereitgestellt wird, die senkrecht zu den zu schweißenden Teilen verläuft, und **dadurch gekennzeichnet, dass**:
- der TIG Schweißbrenner (2) im Schritt b) derart ausgerichtet ist, sodass die Elektrode (2a), mit der der TIG Brenner ausgerüstet ist, in einer zweiten Richtung (2b) zeigt, die komplanar mit der ersten Richtung (1b) ist, und mit der besagten ersten Richtung (1b) einen Winkel (α) zwischen 5° und 40° bildet, wobei der besagte TIG Schweißbrenner (2) derart bewegt wird, dass die Spitze der Elektrode (2a) in einem Abstand zur ersten Richtung (1b) bleibt, die zwischen 20 und 44 mm liegt.

6. Verfahren nach Anspruch 5, **dadurch gekennzeichnet, dass** man den besagten TIG Schweißbrenner (2) im Schritt b) derart ausrichtet, dass die besagte gegebene zweite Richtung (2b) mit der besagten ersten Richtung (1b) einen Winkel (α) zwischen 15° und 25°, vorzugsweise zwischen 18° und 23°, und am besten in der Größenordnung von 20° bildet.

7. Verfahren nach irgendeinem der Ansprüche 5 oder 6, **dadurch gekennzeichnet, dass** der TIG Schweißbrenner (2) ein Inertgas anwendet, welches Argon umfasst.

8. Verfahren nach irgendeinem der Ansprüche 5 bis 7, **dadurch gekennzeichnet, dass** der TIG Schweißbrenner (2) Argon anwendet, das eine Reinheit von zumindest 99 Vol.-% aufweist, oder ein Gas, das aus Argon und aus zumindest 10 Vol.-% an Wasserstoff gebildet wird.

9. Verfahren nach irgendeinem der Ansprüche 5 bis 8, **dadurch gekennzeichnet, dass** man Metallteile aus nichtrostendem Stahl verschweißt, die Spitze der Elektrode (2a) in einem Abstand von der ersten Richtung (1b) zwischen 20 und 26 mm, vorzugsweise in der Größenordnung von 24 mm positioniert wird.

10. Verfahren nach irgendeinem der Ansprüche 5 bis 8, **dadurch gekennzeichnet, dass** man Metallteile aus Kohlenstoffstahl verschweißt, die Spitze der Elektrode (2a) in einem Abstand von der ersten Richtung (1b) zwischen 36 und 44 mm, vorzugsweise in der Größenordnung von 40 mm positioniert wird.

11. Verfahren nach einem der Ansprüche 5 bis 10, **dadurch gekennzeichnet, dass** der TIG Lichtbogen und der MIG Lichtbogen das oder die Teile im Bereich eines einzigen gemeinsamen Schweißbades treffen.

12. Verfahren nach einem der Ansprüche 5 bis 11, **dadurch gekennzeichnet, dass** man den TIG Lichtbogen mit einem gepulsten Strom erhält.

13. Verfahren nach einem der Ansprüche 5 bis 11, **dadurch gekennzeichnet, dass** man den TIG Lichtbogen mit einem gepulsten Strom erhält und man den MIG Lichtbogen mit einem glatten Strom erhält.

## Claims

1. Device for the arc welding of metal workpieces (4) comprising a welding torch (1) of the MIG or MAG type combined with a welding torch (2) of the TIG type in such a way as to operate simultaneously, and where said MIG/MAG welding torch (1) comprises a wireguide that makes it possible to guide a consumable wire (1a) according to a given first direction (1b) and the TIG welding torch (2) comprises a non-consumable electrode (2a) pointing in a given second direction (2b), **characterised in that** said first and second directions (1b, 2b) are coplanar and form an angle (α) greater than 10° and less than 40°, and **in that** the electrode (2a) of the TIG welding torch (2) comprises a tip (D) located at a distance (d) from said first direction (1b) between 20 and 44 mm.

2. Device according to claim 1, **characterised in that** the tip (D) is located at a distance (d) from the first direction (1b) between 20 and 26 mm or between 36 and 44 mm.

3. Device according to one of the preceding claims, **characterised in that** said first and second directions (1b, 2b) form an angle (α) between 15° and 25°, preferably between 18 and 23°, advantageously about 20°.

4. Device according to claim 1, **characterised in that** the electrode (2a) comprises a conical sharpening on said tip (D), said conical sharpening having an opening (β) between 20 and 40°.

5. Method for the arc welding of metal workpieces (4) comprising the steps of:
a) progressively creating a weld bead (5a) on the metal workpieces (4) by means of a welding torch (1) of the MIG/MAG type with a consumable filler wire, displaced relatively with respect to said metal workpieces (4),
b) applying an electric arc (2c) on at least one portion of the crude weld bead (5a) obtained in the step a), with the electric arc (2c) being produced by a welding torch (2) of the TIG type which is displaced in a synchronised manner with the welding torch (1) of the MIG/MAG, type
wherein in the step a), a consumable wire (1a) delivered by the MIG/MAG torch is guided according to a first direction (1b) perpendicular to the work pieces to be welded, and **characterised in that**:
- in the step b), the TIG welding torch (2) is oriented in such a way that the electrode (2a) provided on said TIG torch points in a second direction (2b) coplanar with the first direction (1b), and forms with said first direction (1b) an angle (α) between 5 and 40°, said TIG welding torch (2) being displaced in such a way that the tip of the electrode (2a) remains at a distance from the first direction (1b) between 20 and 44 mm.

6. Method according to claim 5, **characterised in that**, in the step b), said TIG welding torch (2) is oriented in such a way that said given second direction (2b) forms with said first direction (1b) an angle (α) between 15° and 25°, preferably between 18 and 23°, advantageously about 20°.

7. Method according to any of claims 5 or 6, **characterised in that** the TIG welding torch (2) implements an inert gas comprising argon.

8. Method according to any of claims 5 to 7, **characterised in that** the TIG welding torch (2) implements argon that has a purity of at least 99% by volume or a gas formed from argon and at least 10% by volume of hydrogen.

9. Method according to any of claims 5 to 8, **characterised in that** metal workpieces made of stainless steel are welded, the tip of the electrode (2a) is positioned at a distance from the first direction (1b) between 20 and 26 mm, preferably about 24 mm.

10. Method according to any of claims 5 to 8, **characterised in that** metal workpieces made of carbon steel are welded, the tip of the electrode (2a) is positioned at a distance from the first direction (1b) between 36 and 44 mm, preferably about 40 mm.

11. Method according to one of claims 5 to 10, **characterised in that** the TIG arc and the MIG arc strike the workpiece or workpieces on a single common solder bath.

12. Method according to one of claims 5 to 11, **characterised in that** the TIG arc is obtained with a pulsed current.

13. Method according to one of claims 5 to 11, **characterised in that** the TIG arc is obtained with a pulsed current and the MIG arc is obtained with a smooth current.
